# EUROPÄISCHE PATENTSCHRIFT

(11) **EP 1 195 014 B1**
(45) Veröffentlichungstag und Bekanntmachung des Hinweises auf die Patenterteilung: **29.09.2004**
(21) Anmeldenummer: 00947918.9
(22) Anmeldetag: 04.07.2000
(51) Int. Cl.: H04B 1/707, G01S 13/76, G01S 7/285

(54) **VERFAHREN UND ANORDNUNG ZUR DRAHTLOSEN INFORMATIONSÜBERTRAGUNG ZWISCHEN EINER BASISSTATION UND EINER VIELZAHL VON SENSOREN**
METHOD AND DEVICE FOR THE WIRELESS TRANSMISSION OF INFORMATION BETWEEN A BASE STATION AND A PLURALITY OF SENSORS
PROCEDE ET DISPOSITIF DE TRANSMISSION D'INFORMATIONS PAR VOIE HERTZIENNE ENTRE UNE STATION DE BASE ET UNE PLURALITE DE DETECTEURS

(30) Priorität: 20.07.1999 DE 19933814
(43) Veröffentlichungstag der Anmeldung: 10.04.2002
(73) Patentinhaber: ABB Research Ltd., 8050 Zürich (CH)
(72) Erfinder: APNESETH, Christoffer, N-0263 Oslo (NO); KJESBU, Snorre, N-1341 Siependen (NO); VEFLING, Harald, N-1392 Vettre (NO)
(74) Vertreter: Miller, Toivo
(86) Internationale Anmeldenummer: PCT/EP2000/006217
(87) Internationale Veröffentlichungsnummer: WO 2001/006672

(56) Entgegenhaltungen:
- EP-A- 0 750 201
- EP-A- 0 915 573
- US-A- 5 867 525

## Beschreibung

Die Erfindung bezieht sich auf ein Verfahren zur drahtlosen Informationsübertragung zwischen einer ein breitbandiges, vorzugsweise nach dem Direct Sequence Spread Spectrum (DSSS) Verfahren erzeugtes Hochfrequenzsignal abstrahlenden Basisstation und einer Vielzahl von Teilnehmern, wobei sich die Teilnehmer in unterschiedlichen Entfernungen von der Basisstation befinden, wobei die Teilnehmer das empfangene breitbandige Hochfrequenzsignal entsprechend zu übermittelnder Information gemäß dem Code Division Multiple Access (CDMA) Verfahren codieren, modulieren und zur Basisstation zurück reflektieren und wobei in der Basisstation eine Signalkorrelation und Demodulation dieser empfangenen Antwortsignale erfolgt.

Die Erfindung kann insbesondere zur drahtlosen Informationsübertragung mittels Hochfrequenzsignalen bei einem Industrieroboter, einem Herstellungsautomaten oder Fertigungsautomaten verwendet werden, welcher eine Vielzahl von Näherungssensoren/Näherungsschaltern und/oder Aktoren aufweist. Die Erfindung ermöglicht eine drahtlose informationsübertragung zwischen einer Basisstation mit angeschlossenem Prozeßrechner und einer Vielzahl von Teilnehmern, hier Näherungssensoren/Näherungsschaltern und/oder Aktoren. Als Teilnehmer können beispielsweise auch Temperaturmeßsensoren, Druckmeßsensoren, Strommeßsensoren oder Spannungsmeßsensoren, mikromechanische, piezoelektrische, elektrochemische, magnetosiriktive, elektrostriktive, elektrostatische oder elektromagnetische Aktoren oder Anzeigeelemente verwendet werden.

Außer bei Industrierobotern, Herstellungsautomaten und Fertigungsautomaten kann die Erfindung auch bei Automationssystemen, Steuer/Regelsystemen, Fernsteuersystemen, Schutz- und Sicherheitssystemen (beispielsweise bei Freiluft- oder Innenraum-Schaltanlagen), Alarmsystemen, Zustandsüberwachungs-Systemen, in der Robotertechnik oder ganz allgemein bei Maschinen/Maschinensystemen zum Einsatz gelangen.

Die drahtlose Kommunikation zwischen einer Basisstation und mehreren Teilnehmern erfolgt üblicherweise über einen Hochfrequenzträger. Besonders vorteilhaft ist es dabei, wenn die Teilnehmer zur Informationsübertragung die empfangenen Hochfrequenzträger modulieren und zur Basisstation zurück reflektieren, denn die Teilnehmer müssen in einem solchen Fall zur Informationsübertragung keine eigenen Hochfrequenzsignale erzeugen, sondern benutzen das Hochfrequenzsignal der Basisstation (Backscatter-System).

Die Demodulation des modulierten Hochfrequenzsignales ist unkritisch für die Basisstation, beispielsweise hinsichtlich der zeitlichen Abstimmung, im Unterschied zur Demodulation eines fremderzeugten, im Teilnehmer selbst produzierten Hochfrequenzsignales. Im Vergleich zur Fremderzeugung des Hochfrequenzsignales im Teilnehmer ist die Reflexion des Hochfrequenzsignales auch hinsichtlich des erforderlichen Energieverbrauches wesentlich günstiger. Insgesamt ergibt sich eine beträchtliche Kostenreduktion, sowohl hinsichtlich der Gestehungskosten als auch hinsichtlich der laufenden Betriebskosten.

Aus der EP 0915573 A ist beispielsweise ein solches moduliertes Backscatter-System bekannt, bei dem ein breitbandiges, nach dem Direct Sequence Spread Spectrum Verfahren- erzeugtes Hochfrequenzsignal von einer Basisstation zu einer Vielzahl von Teilnehmern abgestrahlt wird. Die Teilnehmer reflektieren das empfangene und entsprechend zu übermittelnder Informationen modulierte Signal zurück zur Basisstation.

Allgemein bekannt ist auch der Einsatz des Mehrfachzugriffsverfahrens CDMA (siehe hierzu beispielsweise die nachfolgenden Literaturhinweise). Bei der Benutzung von CDMA ist es jedoch von Wichtigkeit, daß die Leistung der von den Teilnehmern reflektierten Signale ungefähr gleich groß ist, da ansonsten auf Grund der gleichzeitig sendenden Teilnehmer störende und unzulässige Interferenzen auftreten. Üblicherweise ist deshalb ein Leistungsregelsystem vorgesehen, um die Leistungen der von der Basisstation empfangenen Signale zu vergleichmäßigen. Ein derartiges Leistungsregeisystem ist jedoch kostenaufwendig und erfordert einen Zwei-Richtungsinformationsaustausch zwischen der Basisstation und den Teilnehmern.

Der Erfindung liegt die Aufgabe zugrunde, ein Verfahren zur drahtlosen Informationsübertragung zwischen einer Basisstation und einer vielzahl von Teilnehmern anzugeben, bei dem Interferenzen zwischen den Teilnehmern minimiert sind.

Diese Aufgabe wird in Verbindung mit den Merkmalen des Oberbegriffes erfindungsgemäß dadurch gelöst, daß bei der Korrelation ein Zeitversatz des Korrelations-Peaks erzielt wird und eine Zeitbemessung dieses Offsets des Korrelations-Peaks derart erfolgt, daß die Antwortsignale der nahe gelegenen Teilnehmer stärker abgeschwächt werden als die Signale der weiter entfernteren Teilnehmer, wodurch eine automatische Kompensation unterschiedlicher Ausbreitungsdämpfungen zwischen unterschiedlich von der Basisstation entfernten Teilnehmern erfolgt.

Die mit der Erfindung erzielbaren Vorteile bestehen darin, daß ein Leistungsregelsystem zur Regelung von Sendeleistungen nicht erforderlich ist, was beträchtliche Kostenvorteile hat. Ein Zwei-Richtungs-Informationsaustausch zwischen der Basisstation und den Teilnehmem ist nicht erforderlich, es genügt eine Informationsübertragung von den Teilnehmern zur Basisstation. Es erfolgt eine automatische Kompensation der jedem Teilnehmer zugeordneten Ausbreitungsdämpfung im Sinne einer Vergleichmäßigung der Ausbreitungsdämpfungen aller Teilnehmer.

Es wird ein drahtloses Kommunikationssystem mit einer sehr hohe Teilnehmer-Dichte, mit hoher Informationsübertragungs-Dichte, mit hoher Zuverlässigkeit hinsichtlich der Datenübertragung ohne störende Interferenzen, mit hoher Datenintegrität und mit kurzer Daten-Latenzzeit ermöglicht. Die einzelnen Teilnehmer weisen eine niedrige Komplexität, niedrige Verluste und einen niedrigen Leistungsverbrauch auf und sind kostengünstig herstellbar. Insgesamt ist die Fähigkeit zur Störungsunterdrückung in hohem Maß gegeben, der frequenzselektive Schwund ist in signifikanter Weise reduziert.

Die Erfindung ist insbesondere bei einem aus mindestens einer Basisstation und einer Vielzahl von Teilnehmern bestehenden Netz von großem Vorteil, denn sie erlaubt eine hohe Teilnehmerdichte und eine hohe Signaldichte und gewährleistet eine hohe Genauigkeit und hohe Zuverlässigkeit bei der Datenübertragung.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Anordnung zur drahtlosen Informationsübertragung zwischen einer Basisstation und einer Vielzahl von Teilnehmern,
- Fig. 2: einen Sensor als Beispiel eines Teilnehmers mit zugeordneter Basisstation,
- Fig. 3, 4: zwei Dämpfungs/Zeit-Diagramme zur Erläuterung des erfindungsgemäßen Verfahrens (nicht maßstabsgerecht).

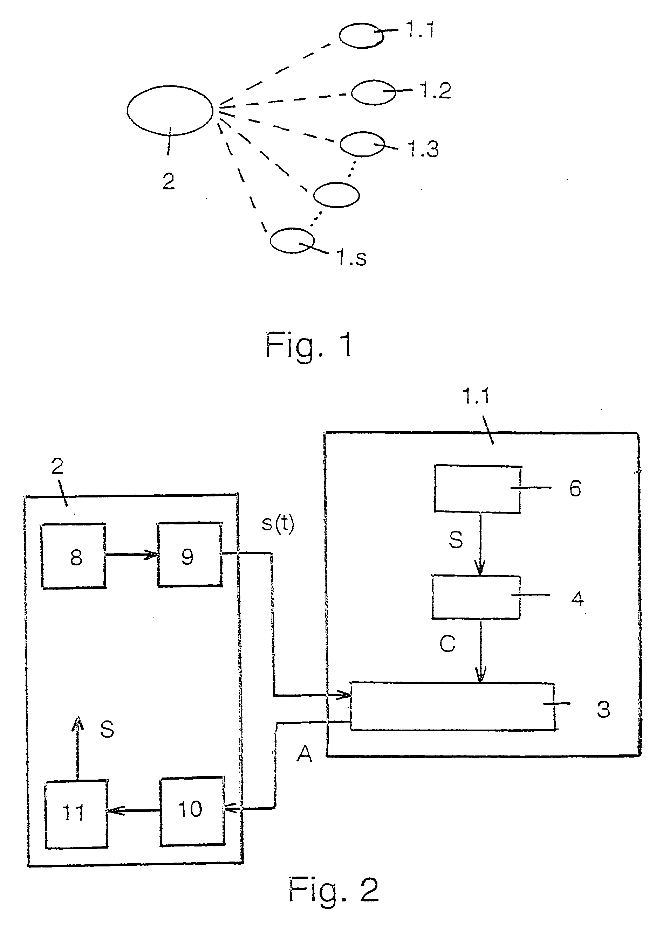

In Fig. 1 ist eine Anordnung zur drahtlosen Informationsübertragung zwischen einer Basisstation 2 und einer Vielzahl von Teilnehmern 1.1, 1.2, 1.3 ... 1.s, vorzugsweise Sensoren oder Aktoren, dargestellt (Backscatter-System). Die Kommunikation zwischen Basisstation und Teilnehmern erfolgt vorzugsweise gemäß dem DSSS (Direct Sequence Spread Spectrum) Verfahren, d. h. die Basisstation 2 sendet ein breitbandiges Hochfrequenzsignal zu den Teilnehmern 1.1 bis 1.s.

Wenn vorstehend von "Hochfrequenzsignalen" die Rede ist, sind hierbei selbstverständlich auch Very-High-Frequency-Signale, Extremely-High-Frequency-Signale, Ultra-High-Frequency-Signale und Super-High-Frequency-Signale eingeschlossen.

Zur Spread Spectrum-Übertragungstechnik (gespreiztes Spektrum) wird auf das Fachbuch "Digitale Kommunikation über Funk: Methoden und Meßtechnik digitaler Nachrichtenübermittlung", von P. Hatzold, Franzis-Verlag, 1999, Seite 171 bis 182 hingewiesen. Mit Spread Spectrum Signalen wird eine Breitbandigkeit der Aussendungen erzeugt. Eine herausragende Eigenschaft dieser Signale ist es, daß die zu ihrer Übertragung verwendete Hochfrequenz-Bandbreite wesentlich größer ist als die Symbolrate des Datensignals. Dies führt zu einer Verteilung der Sendeleistung über einen weiten Frequenzbereich und damit zu einer äußerst geringen spektralen Leistungsdichte. Dadurch sind die Signale im Rauschen schwer zu erkennen. Die Kapazität, d. h. die Menge der übertragbaren Informationen, wächst linear mit der Bandbreite. Eine weitere Eigenschaft dieser Signale ist ihre große Ähnlichkeit mit weißem Rauschen, die von der Verknüpfung der Basisbandsignale mit Pseudo-Random-Folgen rühren.

Die Aufspreizung der Bandbreite kann dabei grundsätzlich auf zwei Arten erfolgen. Entweder wird die Trägerfrequenz während der Dauer der Übertragung eines Symbols nach einer Pseudo-Zufallsfolge verändert (Fast Frequency Hopping) oder es werden die zu übertragenden Symbole, bevor sie den Hochfrequenz-Träger modulieren, mit einer Pseudo Random Bit Sequence (PRBS, Pseudo Zufallsfolge, Spreading Code, Spreizfunktion) erheblich höherer Taktrate verknüpft (DSSS). Natürlich muß in beiden Fällen den Teilnehmern die jeweils verwendete Pseudo Zufallsfolge bekannt sein, so daß sie bei Fast Frequency Hopping die Empfangsfrequenz der Zufallsfolge des Senders nachführen bzw. bei DS Spread Spectrum mittels Korrelatiortstechniken sich das für sie bestimmte Signal aus dem Rauschspektrum aussieben können.

Die einzelnen Teilnehmer 1.1 bis 1.s des Netzes antworten der Basisstation 2 und reflektieren mit entsprechenden Informationen (beispielsweise detektierte Sensorinformationen) versehende und gemäß dem Code Division Multiple Access (CDMA) Verfahren codierte und modulierte Antwortsignale A an die Basisstation 2 zurück.

Zum CDMA-Verfahren (Code Division Multiplex Access) wird allgemein auf das Fachkompendium "Informationstechnologie von A - Z", Aktuelles Nachschlagewerk für die berufliche Praxis, Band 1, Interest GmbH, Augsburg, Februar 1999 hingewiesen. Dieses Mehrfachzugriffverfahren basiert auf dem Codemultiplexverfahren CDM (Code Division Multiplex) und ermöglicht ein Antworten aller Teilnehmer eines Netzes auf der gleichen Frequenz. Die Kennung und Unterscheidung der einzelnen Teilnehmer 1.1 bis 1.s wird dadurch vorgenommen, daß bei jedem Teilnehmer die zurückgestreuten Signale mit einem individuellen Pseudo-Zufallscode verknüpft sind. Die mit unterschiedlichen Codes ausgestatteten Antwortsignale aller Teilnehmer überlagern sich und ergeben ein breitbandiges Spektrum (Spread Spektrum), das um den codeabhängigen Spreizungsfaktor größer ist als das ursprüngliche Signal. Der Spreizungsfaktor ist dabei ein Maß dafür, wieviel Signale überlagert werden können.

Die Pseudo Zufallsfolge (Spreading Code) wird für jeden Teilnehmer 1.1 bis 1.s im Sinne einer Code-Einteilung getrennt festgelegt (Zuteilung einer lokalen Adresse) und ist der Basisstation bekannt.

Fig. 2 zeigt hierzu einen Sensor, insbesondere Näherungssensor, als Beispiel eines Teilnehmers 1.1 mit zugeordneter Basisstation 2. Der Sensor weist eine Antenne/Rückstreueinrichtung 3, eine Modulationseinrichtung/Codiereinrichtung 4 und einen Sensorkopf 6 auf. Weitere, hier nicht interessierende Einheiten des Sensors, beispielsweise eine zur Energieversorgung geeignete Energieeinheit, sind nicht dargestellt. Die Basisstation 2 weist neben hier nicht interessierenden Einheiten einen Modulator/Codierer 8, eine Sendeeinrichtung 9, eine Empfangseinrichtung 10 und einen Demodulator/Decodierer 11 auf.

Der Sensor empfängt das von der Basisstation 2 abgestrahlte breitbandige Hochfrequenzsignal s(t). Der Sensorkopf 6 gibt die detektierte Sensorinformation S an die Modulationseinrichtung/Codiereinrichtung 4, welche entsprechende Modulationssignale C generiert und der Antenne/Rückstreueinrichtung 2 zuleitet. Der Demodulator/Decodierer 11 (inklusive Korrelator) der Basisstation 2 bildet aus den über die Funkverbindung Antenne/Rückstreueinrichtung 3 - Empfangseinrichtung 10 empfangenen Antwortsignalen A die von den einzelnen Teilnehmern, hier Sensoren, übermittelten Sensorinformationen S.

Gleichzeitig nimmt die Basisstation 2 alle anderen Signale der weiteren Teilnehmer als Summen-Störleistung wahr. Dabei kann die Summen-Störleistung wesentlich größer sein als die Empfangsleistung des zu empfangenen Signals. Das einzelne Signal geht nur scheinbar im Rauschen des Summen-Störleistung unter.

Bei einem Zellulärsystem mit mehreren Teilnetzen (Zellen), wobei jedes Teilnetz eine Basisstation und mehrere Teilnehmer aufweist, erfolgt die Kommunikation zwischen Basisstationen und zugeordneten Teilnehmern beispielsweise auch im CDMA-Verfahren, wobei jedem Teilnetz eine unterschiedliche Code-Sequenz zugeordnet ist.

Alternativ kann bei einem Zellulärsystem die Kommunikation zwischen Basisstationen und zugeordneten Teilnehmern beispielsweise auch im FDMA (Frequency Domain Multiple Access) Verfahren erfolgen, wobei jedem Teilnetz eine unterschiedliche Frequenz zugeordnet ist.

Wesentliche Idee der Erfindung ist eine automatische Kompensation unterschiedlicher Ausbreitungsdämpfungen zwischen unterschiedlich von der Basisstation 2 entfernten Teilnehmern 1.1 bis 1.n. Ausgegangen wird von der Überlegung, daß die vorstehend erwähnte Kommunikationsweise mit CDMA und Korrelation vorteilhaft in dem Sinne ist, daß die Basisstation nicht mehr auf die Antwortsignale der Teilnehmer synchronisiert werden muß, da bereits eine bis auf die Laufzeit der Signale perfekte zeitliche Abstimmung vorliegt, wie bereits vorstehend erwähnt. Dabei hängt der Zeitbedarf des zur Basisstation 2 zurückgekehrten Signals von der Entfernung zwischen der Basisstation und den einzelnen Teilnehmern ab, d. h. es gibt eine direkte Verbindung zwischen der Signal-Ankunftszeit und der Entfernung und damit der Ausbreitungsdämpfung, da letztere näherungsweise von der Entfernung abhängt. Je näher der Teilnehmer an der Basisstation liegt, um so stärker ist das empfangene Signal und um so früher kommt es an.

Durch die Erfindung werden Einschränkungen hinsichtlich der Signal-Übertragungsrate und des durch die Korrelation erzielbaren Zeitversatzes - nachfolgend als Offset des Korrelations-Peaks bezeichnet - bewirkt, so daß die Korrelationsfunktion einerseits und die Ausbreitungsdämpfung andererseits in umgekehrtem (inversen) Verhältnis miteinander zu verknüpfen sind. Falls die Ausbreitungsdämpfung im interessierenden Bereich invers an den Offset des Korrelations-Peaks angepaßt ist, wird sie auch im Nahbereich eine flache Amplituden-Antwort (d. h. stärker gedämpft) nach dem Korrelator verursachen. Falls es erwünscht ist, das gute Signal-Rauschverhältnis im Nahbereich aufrechtzuerhalten, kann dies durch einen weiteren Korrelator ermöglicht werden.

Aus dem Stand der Technik sind im Zusammenhang mit Code-Synchronisations-Schleifen Synchronisations-Kurvenverläufe in Gestalt von S-Kurven bekannt, die sich durch Offsets von Korrelations-Peaks erzeugen lassen, welche in vielfältiger Art (invers) an Verlustkurven (Dämpfungskurven) anpaßbar sind. Ferner lassen sich Offsets von Korrelations-Peaks erzeugen, welche die Empfangsenergie der Teilnehmer im Nahbereich verkleinern, indem unterschiedliche Korrelations-Funktionen (mit unterschiedlichen Offsets) kombiniert und/oder geänderte Referenz-Funktionen (beispielsweise mit Drei-Stufen-Sequenz) verwendet werden. Dabei ist es zweckmäßig, die Teilnehmer 1.1 bis 1.s in Abhängigkeit ihrer Entfernung von der Basisstation 2 in unterschiedliche Zonen zu unterteilen, um derart unterschiedliche Maßnahmen für die einzelnen Zonen anzuwenden, welche die bei der Kommunikation der Teilnehmer mit der Basisstation auftretenden Interferenzen herabsetzen.

Insbesondere wird die DSSS Chiprate des von der Basisstation abgestrahlten Signals an die Ausbreitungsdämpfungs-Kurve angepaßt, welche ihrerseits von der Frequenz und dem interessierenden Entfernungsbereich abhängt. Die Chiprate ist als 1/T_{c} definiert, wobei T_{c} die Chipdauer ist und der reziproken PRBS-Taktrate entspricht.

Die Zeitbemessung des Offset des Korrelations-Peaks kann adaptiv in Abhängigkeit der konkret vorliegenden Anordnung mit mindestens einer Basisstation 2 und einer Vielzahl von Teilnehmern 1.1 bis 1.s erfolgen, dabei kann ein automatisch ablaufender Algorithmus dies entweder fortwährend oder in festgelegten zeitlichen Abständen oder einmalig bei Installation der Anordnung optimieren.

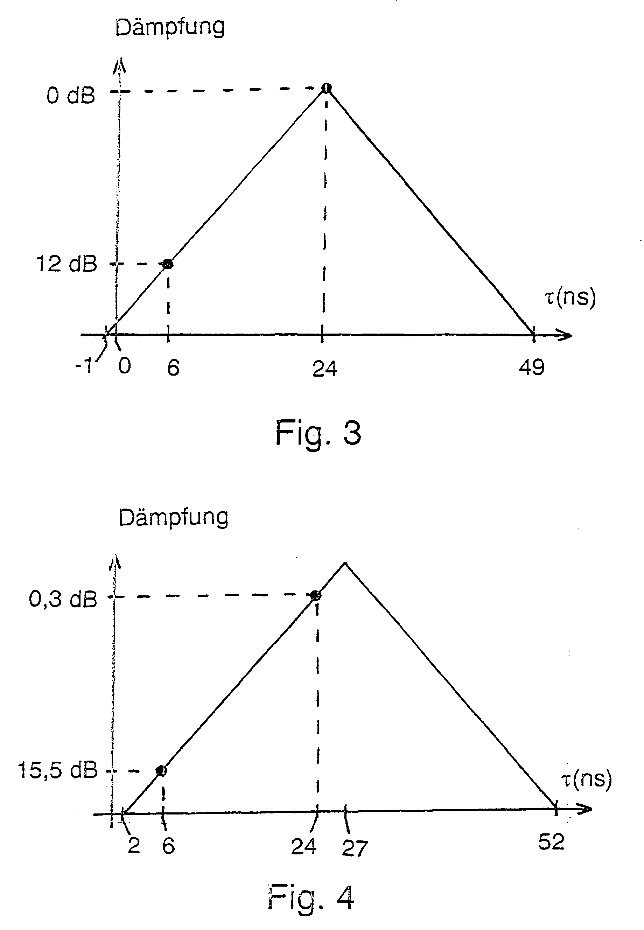

Die Erfindung soll an einem konkreten Beispiel und an Hand der Dämpfungs/Zeit-Diagramme gemäß den Figuren 3 und 4 näher erläutert werden: Gegeben sei eine Anordnung mit einer Basisstation 2 und einer Vielzahl von Teilnehmern 1.1 bis 1.s im Bereich von 1 bis 4 m Entfernung, wobei die Kommunikation zwischen der Basisstation und den Teilnehmern mittels DSSS bei einer Trägerfrequenz von 2,4 GHz und einer Chiprate von 40 MHz erfolgt (Periodendauer 25 ns). Der Signalweg im Nahbereich (1m Entfernung) beträgt 2 m, so daß das 1. Signal nach t₁ = 6 ns gedämpft um 60 dB (bezogen auf den Sendepegel, Rayleigh-Faktor 1,5) zurückkehrt. Der Signalweg im Fernbereich (4 m Entfernung) beträgt 8 m, so daß das 2. Signal nach t₂ = 24 ns gedämpft um 78 dB (bezogen auf den Sendepegel) zurückkehrt. Die Differenz zwischen beiden Ausbreitungsdämpfungen ist in nachteiliger Weise mit 18 dB relativ hoch, was zu störenden Interferenzen führt.

Das Placieren des Korrelations-Peaks auf t₂ = 24 ns - wie in Fig. 3 gezeigt - hat zur Folge, daß das 1. Signal zusätzlich um weitere 12 dB gedämpft wird, während die Ausbreitungsdämpfung beim 2. Signal unverändert bleibt, d. h. einer Dämpfung von 78 dB beim 2. Signal steht nun eine Dämpfung von 72 dB beim 1. Signal gegenüber. Die Differenz zwischen beiden Ausbreitungsdämpfungen hat sich nunmehr auf 6 dB reduziert.

Das Placieren des Korrelations-Peaks auf t₃ = 27 ns - wie in Fig. 4 gezeigt - hat zur Folge, daß das 1. Signal zusätzlich um weitere 3,5 dB gedämpft wird (siehe 15,5 dB), während sich die Ausbreitungsdämpfung beim 2. Signal um lediglich 0,3 dB erhöht, d. h. einer Dämpfung von 78,3 dB beim 2. Signal steht nun eine Dämpfung von 75,5 dB beim 1. Signal gegenüber. Die Differenz zwischen beiden Ausbreitungsdämpfungen hat sich nunmehr vorteilhaft auf 2,8 dB reduziert. Durch weiteres Verschieben des Offsets des Korrelations-Peaks ist eine weitere Optimierung in Richtung auf möglichst geringe Differenz zwischen den Ausbreitungsdämpfungen möglich.

Zur allgemeinen Funktionsweise einer Code-Sychronisations-Schleife (Code Trakking Loop) wird auf das Fachbuch "Spread Spectrum CDMA Systems for Wireless Communications" 1997, Artech House, Inc. Boston, London, Seiten 120 bis 128, insbesondere Seite 124 bis 126, Kapitel 3.2.3. Tau Dither Early-Late Noncoherent Trakking Loop mit Figuren 3.14 und 3.15 hingewiesen. Dort sind ein Verfahren und eine Anordnung zur Signalkorrelation eines in Spread Spectrum-Übertragungstechnik modulierten breitbandigen Hochfrequenzsignales unter Einsatz einer Tau-Dither-Early-Late-Code- Tracking-Schleife zur Code-Erfassung und Code-Synchronisation bekannt.

## Patentansprüche

1. Verfahren zur drahtlosen Informationsübertragung zwischen einer ein breitbandiges, vorzugsweise nach dem Direct Sequence Spread Spectrum (DSSS) Verfahren erzeugtes Hochfrequenzsignal abstrahlenden Basisstation (2) und einer Vielzahl von Teilnehmern (1.1 bis 1.s), wobei sich die Teilnehmer in unterschiedlichen Entfernungen von der Basisstation befinden, wobei die Teilnehmer (1.1 bis 1.s) das empfangene breitbandige Hochfrequenzsignal entsprechend zu übermittelnder Information (S) gemäß dem Code Division Multiple Access (CDMA) Verfahren codieren, modulieren und zur Basisstation (2) zurück reflektieren und wobei in der Basisstation (2) eine Signalkorrelation und Demodulation dieser empfangenen Antwortsignale (A) erfolgt, **dadurch gekennzeichnet, daß** bei der Korrelation ein Zeitversatz des Korrelations-Peaks erzielt wird und eine Zeitbemessung dieses Offsets des Korrelations-Peaks derart erfolgt, daß die Antwortsignale (A) der nahe gelegenen Teilnehmer (1.1 bis 1.s) stärker abgeschwächt werden als die Signale der weiter entfernteren Teilnehmer, wodurch eine automatische Kompensation unterschiedlicher Ausbreitungsdämpfungen zwischen unterschiedlich von der Basisstation (2) entfemten Teilnehmern (1.1...1.s) erfolgt.

2. Verfahren nach Anspruch 1, **dadurch gekennzeichnet, daß** die Chiprate (1/T_{c}) des von der Basisstation (2) ausgesandten breitbandigen Signals an die Entfernungen zwischen Teilnehmern (1.1 bis 1.s) und Basisstation (2) bzw. an die Ausbreitungsdämpfungen angepaßt ist.

## Claims

1. A method for the wireless transmission of information between a base station (2) radiating a broadband high-frequency signal preferably generated according to the Direct Sequence Spread Spectrum (DSSS) method and a plurality of subscribers (1.1. through 1.s), with the subscribers being situated in different distances from the base station, with the subscribers (1.1 through 1.s) encoding, modulating and reflecting back to the base station (2) the information to be transmitted according to the received broadband high frequency signal according to the Code Division Multiple Access (CDMA) method, and with a signal correlation and demodulation of said received response signals (A) occurring in the base station (2), **characterized in that** in the correlation a time offset of the correlation peak is produced and a time measurement of said offset of the correlation peak is produced in such a way that the response signals (A) of the close subscribers (1.1 through 1.s) are attenuated more strongly than the signals of the subscribers farther away, thus producing an automatic compensation of different attenuations in propagation between the subscribers (1.1 through 1.s) who are differently remote from the base station (2).

2. A method as claimed in claim 1, **characterized in that** the chip rate (1/T_{c}) of the broadband signal transmitted from the base station (2) is adjusted to the distances between the subscribers (1.1 through 1.s) and the base station (2) or to the attenuations in propagation.

## Revendications

1. Procédé pour la transmission sans fil d'informations entre une station de base (2) émettant un signal à haute fréquence et à large bande produit de préférence selon le procédé de spectre en séquence directe (DSSS) et une pluralité d'appareils connectés (1.1 à 1.s), lesquels appareils connectés se trouvent à des distances différentes de la station de base, dans lequel les appareils connectés (1.1 à 1.s) codent le signal à haute fréquence et à large bande capté en fonction d'informations (S) à transmettre selon le procédé d'accès multiple à répartition par code (CDMA), le modulent et le renvoient à la station de base (2), et dans lequel la station de base (2) réalise une corrélation des signaux et une démodulation de ces signaux de réponse (A) reçus, **caractérisé en ce que** lors de la corrélation, un décalage temporel du pic de corrélation est réalisé et une mesure temporelle de ce décalage du pic de corrélation est effectuée de telle manière que les signaux de réponse (A) des appareils connectés (1.1 à 1.s) proches soient plus fortement atténués que les signaux des appareils connectés plus éloignés, ce qui réalise une compensation automatique des différences d'atténuation par propagation entre des appareils connectés (1.1 à 1.s) situés à différentes distances de la station de base (2).

2. Procédé selon la revendication 1, **caractérisé en ce que** le débit binaire en ligne (1/T_{c}) du signal à large bande émis par la station de base est adapté aux distances entre les appareils connectés (1.1 à 1.s) et la station de base (2) ou aux atténuations par propagation.
